## Europäisches Patentamt

## European Patent Office

## Office européen des brevets

(11) Veröffentlichungsnummer: **0 034 860**
**A1**

(12) # EUROPÄISCHE PATENTANMELDUNG

(21) Anmeldenummer: **81200177.4**

(22) Anmeldetag: **16.02.81**

(51) Int. Cl.³: **H 01 M 2/12**

(30) Priorität: **22.02.80 CH 1430/80**

(43) Veröffentlichungstag der Anmeldung:
**02.09.81 Patentblatt 81/35**

(84) Benannte Vertragsstaaten:
**AT BE CH DE FR GB IT LI LU NL SE**

(71) Anmelder: **Electrona S.A.**
**Pré Landry 22**
**CH-2017 Boudry Kanton Neuenburg(CH)**

(72) Erfinder: **Ausderau, Albert**
**27, rue du Stand**
**CH-2034 Peseux/NE(CH)**

(74) Vertreter: **Bovard, Fritz Albert et al,**
**Bovard & Cie Patentanwälte VSP Optingenstrasse 16**
**CH-3000 Bern 25(CH)**

(54) **Verschlusspfropfen für Akkumulatoren mit einem aufklappbaren Deckel.**

(57) An einem Akkumulatorpfropfen mit einem aufklappbaren Deckel (7) ist der Deckel (7) mit einer Haube (11) aus porösem, den Rückschlag von Flammen verhindernden Material abgeschlossen. Die Vorteile eines Pfropfens mit aufklappbarem Deckel und eines solchen mit einem den Rückschlag von Flammen hindernden Abschluss sind somit vereinigt.

Fig. 1

EP 0 034 860 A1

0034860

- 1 -

Verschlusspfropfen für Akkumulatoren mit
einem aufklappbaren Deckel.

Die vorliegende Erfindung betrifft einen Verschlusspfropfen für Akkumulatoren, welcher einen mit einem Scharnier
daran befestigten Deckel aufweist. Dieser Deckel besitzt
Oeffnungen zum Durchtritt von Gasen und ist zum Einfüllen und/oder Entnahme von Flüssigkeiten aufklappbar. Ein
solcher Verschlusspfropfen, welcher neben dem Einfüllen
und der Entnahme von Flüssigkeiten noch die Feststellung
des Flüssigkeitsspiegels in der Zelle ohne Abschrauben
des Pfropfens oder Oeffnen des Deckels erlaubt, ist beispielsweise aus der schweizerischen Patentschrift 452'623,
insbesondere Figur 4, bekannt geworden. Pfropfen mit einem solchen aufklappbaren Deckel erlauben somit eine
wesentliche Arbeitsersparnis bei der Ueberwachung und
dem Unterhalt von Akkumulatoren.

Da bei den Akkumulatoren gegen das Ende des Aufladevorgangs Knallgas durch die Oeffnungen des Pfropfens hindurch nach aussen abgegeben wird, besteht die Gefahr,
dass sich dieses Gas irgendwo entzündet und die entstehende Flamme durch die genannten Oeffnungen hindurch
in das Innere der betreffenden Zelle zurückschlägt und
in dem oberhalb der Flüssigkeit befindlichen Raum der
Zelle eine Explosion bewirkt. Um solchen Explosionen vorzubeugen, ist es beispielsweise aus der amerikanischen Patentschrift 3'907'605 bekannt geworden, anstelle von gewöhnlichen Oeffnungen im Pfropfen einen gasdurchlässigen, porösen Körper anzuordnen, welcher zwar Kanallgas durchtreten lässt, infolge der verhältnismässig langen und dünnen, das Gas abkühlenden Kanäle jedoch eine Flamme am Zurückschlagen hindert. Als Material für den porösen Körper werden Siliziumkarbid, Polyvinylfluorid und andere gesinterte oder geschäumte Materialien verwendet. Bei allen bekannten Pfropfen, welche mit einem Gasauslass aus porösem Material versehen sind, ist der poröse Körper mit den übrigen Teilen des Pfropfens fest verbunden, und es ist daher notwendig, bei der Ueberprüfung oder beim Nachfüllen der Flüssigkeit der betreffenden Zelle den Pfropfen zu entfernen.

Dank der vorliegenden Erfindung ist es nun möglich, die Vorteile der Pfropfen mit einem aufklappbaren Deckel und der Pfropfen mit Mitteln zur Verhinderung des Uebertritts einer Flamme in das Innere der Zelle miteinander zu kombinieren. Sie betrifft einen Verschlusspfropfen der eingangs beschriebenen Art, welcher durch die im kennzeichnenden Teil des Patentanspruchs angegebenen Merkmale gekennzeichnet ist.

Die Erfindung wird nun anhand von zwei Ausführungsbeispielen erklärt.

Die Figur 1 zeigt einen Längsschnitt durch das erste Ausführungsbeispiel. Es handelt sich dabei um einen Pfropfen, welcher das Auffüllen und die Entnahme von Flüssigkeit und die Temperaturmessung ohne Ausschrauben erlaubt.

Die Figur 2 zeigt einen Längsschnitt durch das zweite Ausführungsbeispiel. Es handelt sich dabei um einen

- 3 -

Pfropfen, welcher neben den Eigenschaften des ersten Ausführungsbeispiels noch Merkmale aufweist, welche die Höhe des Flüssigkeitsstandes erkennen lassen.

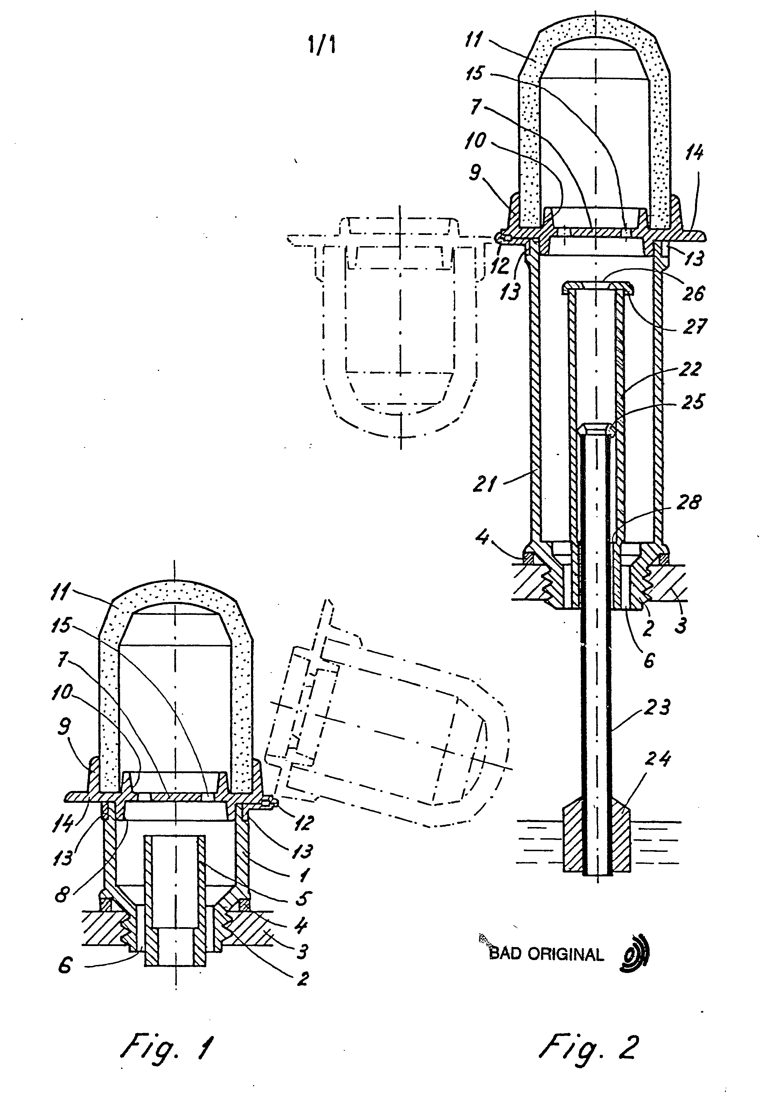

Der in Fig. 1 dargestellte Pfropfen weist einen Becher 1 mit einem Gewinde 2 auf. Der Becher besteht vorzugsweise aus undurchsichtigem Kunststoff und ist mit dem Gewinde, unter Einfügung eines Dichtungsrings 4, in den Deckel 3 einer Akkumulatorzelle eingeschraubt. Der Becher 1 weist in seinem Innern ein konzentrisch angeordnetes Rohr 5 auf, das den Boden des Bechers durchdringt und in nicht dargestellter Weise im Becher derart befestigt ist, dass zwischen Rohr und Becher Kanäle 6 vorhanden sind. Der obere Rand des Rohrs 5 liegt unterhalb des Randes des Bechers.

Auf den obern Rand des Bechers 1 ist ein Deckel 7 aufgesetzt, welcher auf seiner Aussenwand die Innenwand des Bechers berührt und den Innenraum des Bechers und damit den Innenraum der Zelle gasdicht abschliesst. Auf seiner oberen Seite trägt der Deckel zwei konzentrische ringförmige Wulste 9 und 10. In die zwischen diesen beiden Wulsten verlaufende kreisförmige Rinne ist der Rand einer Haube 11 aus porösem, feuerfestem oder schwer schmelzbarem Material eingesetzt und am Deckel angeklebt.

Der Deckel 7 ist über ein Schranier 12 mit einem Ring 13 verbunden, wobei dieser Ring den äussern Rand des Bechers 1 umschliesst. Ring, Deckel und Scharnier bestehen vorzugsweise aus einem einzigen Stück Thermoplast, wobei das Scharnier 12 als dünnes Band ausgebildet ist. Dank diesem Scharnier ist es möglich, den Deckel an der Zunge 14 abzuheben und ihn in die gestrichelt gezeichnete Lage zu verbringen. Alsdann ist es möglich, mit einem durch das Rohr 5 hindurchgesteckten Schlauch Flüssigkeitsproben zu entnehmen, ein Thermometer in die Flüssigkeit zu tauchen oder Flüssigkeit einzufüllen.

Die Löcher 15 im Deckel, welche ausserhalb des Bereichs der Oeffnung des Rohrs 5 angeordnet sind, erlauben den Uebertritt des bei der Ladung der Zelle gebildeten Knallgases vom Raum unterhalb in den Raum oberhalb des Deckels. Vom obern Raum aus durchströmen die Gase die poröse Haube 11 und gelangen in die Umgebung. Mitgerissene und durch das Rohr 5 aufsteigende Flüssigkeitströpfchen prallen dabei am Deckel ab und fliessen durch die Kanäle 6 wieder in die Zelle zurück. Die Haube 11 besteht vorzugsweise aus einem gesinterten keramischen Material, kann aber auch aus einem andern im Zusammenhang mit dem in Frage stehenden Verwendungszweck bekannten porösen Material bestehen. Die Abmessungen und die Dicke der Haube müssen natürlich derart bemessen sein, dass bei der höchstmöglichen sich entwickelnden Gasmenge der Ueberdruck im Innern der Haube nur klein ist, so dass sich der Deckel nicht öffnet. Würde ein solches Oeffnen eintreten, wäre natürlich der ganze Schutz gegen das Zurückschlagen von Flammen in den Zellenraum hinfällig.

Sofern der Pfropfen für eine kleine Zelle bestimmt ist, deren grösstmöglicher Ladestrom und damit auch die Gasentwicklung klein ist, kann das poröse Material in der Form einer Scheibe angebracht werden. Es ist auch möglich, die Oeffnungen 15 derart zu einer einzigen grossen Oeffnung zu vereinigen, dass der Deckel 7 nur noch einen Ring bildet.

Der Pfropfen gemäss Figur 2 weist einen gleichen Deckel auf wie der Pfropfen gemäss Figur 1. Der Unterschied zwischen den beiden Pfropfen liegt darin, dass bei dem in Figur 2 dargestellten anstelle des Bechers ein Hohlzylinder 21 vorhanden ist, dessen Länge wesentlich grösser ist als diejenige des Bechers. Auch hier ist ein Rohr 22 vorhanden, welches nahezu die Länge des Hohlzylinders aufweist. Im Innern dieses Rohres 22 ist ein weiteres bewegliches Rohr 23 angebracht, welches am untern Ende einen auf der Flüssigkeit in der Zelle schwimmenden Schwimmer 24 trägt. Das Rohr 23 weist einen farbigen Ring 25 auf. Der Hohlzylinder 21 und das Rohr 22 sind aus durchsichtigem Material angefertigt, so dass der Ring 25, der die Lage des Schwimmers und damit den Stand der Flüssigkeit anzeigt, von aussen und ohne Offnen des Deckels sichtbar ist. Durch den eine Oeffnung 26 aufweisenden Verschluss 27 des Rohres 22 einerseits und durch den Absatz 28 ist die Bewegung des Rohres 23 beidseitig begrenzt.

Nach dem Aufklappen des Deckels 7 ist es ohne das Entfernen des Pfropfens möglich, mit einem durch die Oeffnung 26 und die Rohre 22 und 25 hindurchgesteckten dünnen Saugschlauch eine Flüssigkeitsprobe zu entnehmen oder mit einem dünnen Thermometer die Temperatur der Flüssigkeit zu messen. Das Auffüllen von Flüssigkeit erfolgt durch Eingiessen in die Oeffnung des Hohlzylinders, worauf die Flüssigkeit zum Teil durch die Kanäle 6 und zum Teil durch die Rohre 22 und 23 fliesst. Am Ring 25 kann während des Füllens der Flüssigkeitsstand ständig beobachtet werden.

- 1 -

Patentanspruch:

Verschlusspfropfen für Akkumulatoren, mit einem mit einem
Scharnier daran befestigten, zum Einfüllen und/oder zur
Entnahme von Flüssigkeit aufklappbaren, Oeffnungen zum
Durchtritt von Gasen aufweisenden Deckel, gekennzeichnet
durch einen ausserhalb der genannten Oeffnungen (15) auf
dem Deckel (7) angebrachten und diesen Teil des Deckels
(7) gegenüber der Umgebung abschliessenden gasdurchlässigen, jedoch den Durchtritt von Flammen verhindernden
Körper (11), welcher von sämtlichen bei der Ladung des
Akkumulators entstehenden und durch die genannten Oeffnungen tretenden Gase auf ihrem Weg in die Umgebung
durchströmt wird.

Fig. 1

Fig. 2

**0034860**

Nummer der Anmeldung

Europäisches Patentamt

**EUROPÄISCHER RECHERCHENBERICHT**

**EP 81 20 0177**

| Kategorie | Kennzeichnung des Dokuments mit Angabe, soweit erforderlich, der maßgeblichen Teile | betrifft Anspruch |
|---|---|---|
| | GB - A - 2 016 798 (CHLORIDE GROUP LTD.) <br> * Figuren 1,2; Anspruch 1 * <br> & DE - A - 2 910 261 <br><br> -- | 1 |
| | DE - U - 7 706 828 (VARTA) <br> * Figur * <br><br> -- | 1 |
| A | FR - A - 2 374 748 (COMP. EUR. D'ACCUM.) <br> * Figur; Anspruch 1 * <br><br> -- | |
| A | DE - U - 7 133 811 (R. BOSCH) <br> * Figur * <br><br> ---- | |

**EINSCHLÄGIGE DOKUMENTE**

**KLASSIFIKATION DER ANMELDUNG (Int Cl.)**

H 01 M 2/12

**RECHERCHIERTE SACHGEBIETE (Int Cl.)**

H 01 M 2/12
10/48
2/36
10/52

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-05-1981 | D'HONDT |

EPA form 1503.1 06.78